# DEMANDE DE BREVET EUROPEEN

(11) **EP 0 540 438 A1**
(43) Date de publication de la demande: **05.05.1993**
(21) Numéro de dépôt: 92440118.5
(22) Date de dépôt: 27.10.1992
(51) Int. Cl.: A01K 23/00, A01K 1/01

(54) **Récipient pour déjections solides canines**

(30) Priorité: 28.10.1991 FR 9113455
(71) Demandeur: MOSER, Andrée, F-90000 Belfort (FR)
(72) Inventeur: MOSER, Andrée, F-90000 Belfort (FR)
(74) Mandataire: Nithardt, Roland

(57) **Abrégé**

La présente invention a pour objet un récipient pouvant être placé dans une position stable sur le sol, en dessous de l'arrière-train d'un chien pour recevoir ses déjections. Au moins une partie du récipient peut être fermée et jetée avec son contenu.

Un récipient jetable (1) est fait d'un élément en forme de pot en matière synthétique et a une forme cylindrique ou prismatique, avec un fond rigide (2), une paroi latérale (3) plissée en accordéon formant une ouverture supérieure (5). La paroi (3) comprend une partie inférieure (3a) semi-rigide et une partie supérieure (3b) souple pouvant être comprimée verticalement en position de stockage avant emploi, puis semi-déployée par son élasticité en position de réception des déjections. Après emploi, la paroi souple (3b) est déployée et nouée pour fermer le récipient. Dans une autre forme de l'invention, l'élément en forme de pot est réutilisable et contient un sachet souple jetable.

## Description

La présente invention concerne un récipient pour déjections solides canines, comportant un élément en forme de pot pourvu d'une ouverture supérieure et d'un fond agencé pour être posé sur le sol et recevoir des déjections au moment où elles sont émises par un chien.

Les déjections des chiens et en particulier leurs crottes sont une source de pollution et de dégradation de la nature et des milieux urbains. C'est pourquoi il convient d'inciter les propriétaires de chiens à prendre les mesures propres à éviter que le sol soit ainsi souillé. La distribution de sachets souples que l'on utilise comme un gant pour ramasser les crottes, puis les envelopper pour les jeter avec les ordures s'est avérée insuffisante, notamment parce qu'elle dégoûte beaucoup les utilisateurs potentiels et parce que les crottes laissent souvent des souillures sur le sol. C'est pourquoi l'on a cherché une solution dans une autre méthode consistant à placer un récipient en forme de pot sous l'arrière-train d'un chien s'apprêtant à déféquer ou même sous celui d'une chienne s'apprêtant à uriner. La publication US-A-3937509 décrit un récipient de ce genre, pourvu d'un manche et destiné à être tapissé intérieurement par un sachet souple en matière synthétique que l'on peut fermer par un noeud et jeter après emploi. Toutefois, l'utilisation d'appareils de ce genre n'a pas pu se répandre, pour des raisons évidentes d'encombrement et de manque de commodité de transport et d'emploi.

La présente invention a pour objet un récipient pour déjections canines agencé d'une manière simple et peu coûteuse, présentant un faible poids et un faible encombrement avant emploi et pouvant être posé sur le sol dans une position stable où il forme une sorte de pot sous l'arrière-train d'un chien pour recevoir ses déjections, ce récipient pouvant être revêtu intérieurement d'un sachet jetable ou former lui- même une enveloppe jetable pour les déjections.

Dans ce but, l'invention concerne un récipient du type indiqué dans le préambule, caractérisé en ce que ledit élément en forme de pot comporte une partie inférieure rigide ou semi-rigide s'étendant au moins sur le pourtour du fond et agencée pour reposer sur le sol dans une position de réception des déjections, et une partie supérieure souple agencée pour être fermée de manière à obturer le récipient après emploi.

Ainsi, la partie inférieure du récipient lui assure une position ouverte et stable pour recevoir les déjections, tandis que la possibilité de fermer la partie supérieure souple permet de fermer le récipient par nouage immédiatement après l'emploi sans se salir les mains et même sans devoir toucher la partie inférieure contenant les déjections, de transporter le récipient et/ou de le jeter avec son contenu.

Ledit élément en forme de pot peut avantageusement être fait d'une seule pièce de matière synthétique, donc être fabriqué de manière peu coûteuse. De préférence, ledit élément en forme de pot comporte une paroi latérale sensiblement cylindrique ou prismatique comprenant une partie inférieure rigide ou semi-rigide et une partie supérieure souple capable de se plier en accordéon pour reposer sur la partie inférieure dans la position de réception.

Dans une forme de réalisation particulière, ladite partie inférieure de la paroi latérale est semi-rigide et plissée en accordéon de façon à pouvoir être comprimée verticalement dans une position de stockage avant emploi, puis semi-déployée par son élasticité dans la position de réception, l'épaisseur du pliage formant la hauteur du pot.

Dans une forme de réalisation avantageuse de l'élément, ladite ouverture supérieure de la paroi latérale est pourvue d'au moins une ficelle ou ruban, du type laisse.

Dans une autre forme de réalisation, le récipient se compose dudit élément en forme de pot et d'un sachet souple jetable, ce sachet ayant des dimensions suffisantes pour pouvoir tapisser l'intérieur dudit élément en étant retroussé par-dessus le pourtour de l'ouverture dans la position de réception. Ladite ouverture peut être définie par un anneau pliable raccordé au bord supérieur de la partie inférieure de l'élément en forme de pot, cet anneau étant composé de deux bandes semi-circulaires rigides dont les extrémités respectives sont articulées et qui comportent des moyens d'accrochage pour être assemblées l'une contre l'autre de manière démontable, de façon à fermer l'élément en forme de pot. De préférence, le fond et ladite partie inférieure de la paroi latérale sont rigides et ladite partie supérieure de la paroi latérale est plissée en accordéon.

La présente invention et ses avantages apparaîtront mieux dans la description suivante de deux exemples de réalisation, en référence aux dessins annexés, dans lesquels :
- la figure 1 est une vue en perspective d'un récipient jetable selon l'invention, fait d'un seul élément en matière synthétique,
- la figure 2 représente ce récipient dans une position de stockage avant emploi,
- la figure 3 représente le même récipient prêt à l'emploi, dans une position dite de réception,
- la figure 4 représente le même récipient après emploi, contenant des déjections et noué dans sa partie supérieure souple,
- la figure 5 est une vue en perspective d'une autre forme de réalisation d'un récipient selon l'invention, composé de deux pièces dont l'une est jetable,
- la figure 6 représente le récipient de la figure 5 en position de réception, et
- la figure 7 représente le récipient de la figure 5 qui est fermé pour le transport après emploi.

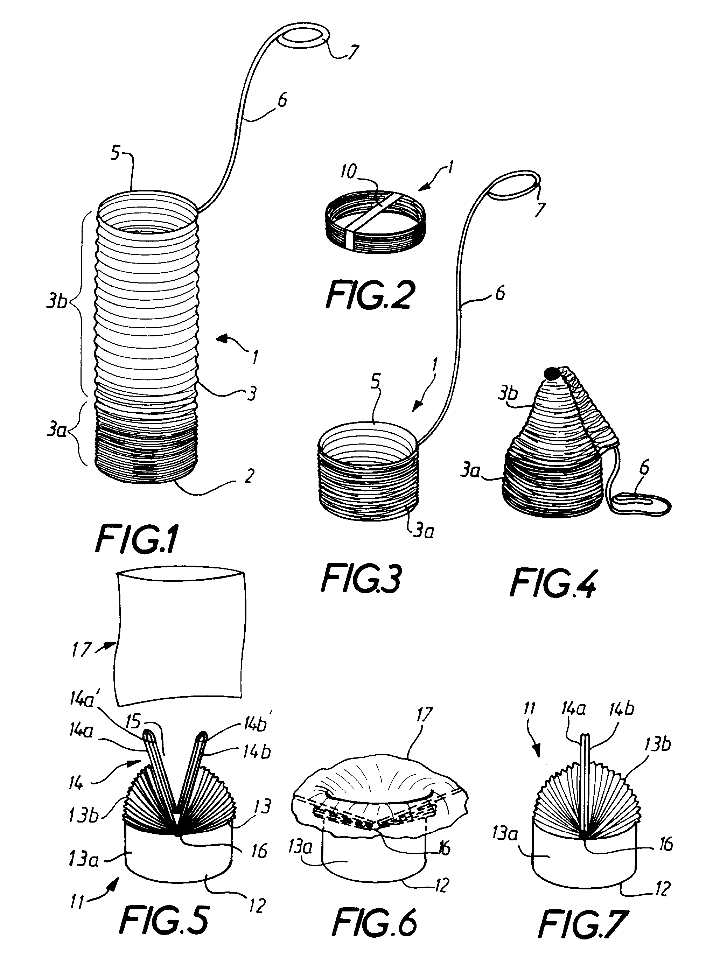

Les figures 1 à 4 montrent un récipient pour déjections 1 en forme de pot, fait d'un seul élément de matière synthétique imperméable et conçu pour être jeté après emploi. L'élément 1 peut avoir un diamètre d'environ 12 à 20 cm, selon la taille de l'animal. Il possède un fond plat rigide 2, une paroi latérale 3 plissée en accordéon de façon à pouvoir se comprimer verticalement et composée d'une partie inférieure semi-rigide 3a et d'une partie supérieure souple 3b assez longue (par exemple 70 cm) pour pouvoir être nouée, et une ficelle ou ruban 6 relié à l'ouverture supérieure 5 du pot, d'une longueur suffisante (par exemple 1, 50 m) pour être tenu par le propriétaire du chien lors de l'emploi, au moyen d'une poignée 7. La ficelle est de préférence blanche ou fluorescente pour être bien visible la nuit.

Ce récipient est utilisable de la manière suivante. Avant emploi, il peut être conservé et transporté sous la forme compacte illustrée par la figure 2 où il est comprimé à plat par une attache 10. Pour l'utilisation, on défait l'attache 10, afin que la partie inférieure 3a reprenne sa hauteur normale par élasticité. Le pot peut alors être posé sur le sol sous l'arrière-train d'un chien pour recevoir ses déjections. Quand le chien a terminé, on déploie la partie supérieure souple 3b à l'aide de la ficelle 6, ce qui évite d'avoir à se baisser, on y fait un noeud, avant de jeter la totalité du pot avec son contenu dans une poubelle.

Dans l'exemple illustré par les figures 5 à 7, le récipient pour déjections se compose d'un élément en forme de pot 11 et d'un sachet souple jetable 17 agencé pour tapisser intérieurement l'élément 11, de sorte que ce dernier ne soit pas sali et puisse être réutilisé. Le pot 11 a un fond circulaire rigide 12 et une paroi latérale cylindrique semi-rigide 13 subdivisée en une partie inférieure lisse 13a, haute de quelques centimètres, et une partie supérieure 13b plissée en accordéon et pourvue d'un bord supérieur renforcé formant un anneau 14 qui entoure l'ouverture supérieure 15 du pot. En fait, l'anneau 14 est formé de deux bandes semi-circulaires 14a et 14b dont les extrémités sont raccordées au bord supérieur de la partie inférieure 13a par une articulation 16, qui permet d'ouvrir le pot comme le montre la figure 6 en position de réception et de fermer le pot comme le montre la figure 7 après emploi en rabattant les deux bandes 14a et 14b l'une contre l'autre. Ces bandes ont des organes d'accrochage réciproque tels que des boutons à pression (non représentés), permettant d'ouvrir et fermer le pot 11 à volonté. Chaque bande est pourvue en son milieu d'une anse 14a' et 14b' qui se rejoignent après fermeture pour servir de poignée facilitant le transport avant et après usage.

Avant emploi, la partie supérieure 13b de la paroi latérale peut être comprimée, comme dans l'exemple précédent, et une réserve de sachets 17 peut être logée dans le pot 11. Pour l'utilisation, on met un sachet dans le pot 11 et l'on replie son bord supérieur par-dessus celui du pot comme le montre la figure 6. Le récipient peut alors être posé dans une position stable sur le sol, sous l'arrière-train d'un chien pour recevoir ses déjections. Une fois l'opération terminée, on ferme le sachet 17, par exemple en nouant sa partie supérieure, et on le jette avec son contenu dans une poubelle, si c'est possible. Dans le cas contraire, il est possible de transporter le sachet 1 fermé à l'intérieur du pot 11 fermé comme le montre la figure 7. On notera aussi que le pot 11 est réutilisable aussi avec les sachets jetables pour crottes de chien qui sont actuellement distribués dans certains lieux publics.

La présente invention n'est pas limitée aux exemples décrits ci-dessus, mais elle s'étend à toutes modifications ou variantes évidentes pour un homme du métier.

## Revendications

1. Récipient pour déjections solides canines, comportant un élément en forme de pot pourvu d'une ouverture supérieure et d'un fond agencé pour être posé sur le sol et recevoir des déjections au moment où elles sont émises par un chien, caractérisé en ce que ledit élément (1,11) en forme de pot comporte une partie inférieure (3a,13a) rigide ou semi-rigide s'étendant au moins sur le pourtour du fond (2,12) et agencée pour reposer sur le sol dans une position de réception des déjections, et une partie supérieure (3b,13b) souple agencée pour être fermée de manière à obturer le récipient après emploi.

2. Récipient selon la revendication 1, caractérisé en ce que ledit élément (1,11 ) en forme de pot est fait d'une seule pièce de matière synthétique.

3. Récipient selon la revendication 1 ou 2, caractérisé en ce que ledit élément en forme de pot comporte une paroi latérale (3,13) sensiblement cylindrique ou prismatique comprenant une partie inférieure rigide ou semi-rigide (3a,13a) et une partie supérieure souple (3b,13b) capable de se plier en accordéon pour reposer sur la partie inférieure dans la position de réception.

4. Récipient selon la revendication 3, caractérisé en ce que ladite partie inférieure (3a,13a) de la paroi latérale est semi-rigide et plissée en accordéon de façon à pouvoir être comprimée verticalement dans une position de stockage avant emploi, puis semi-déployée par son élasticité dans la position de réception, l'épaisseur du pliage formant la hauteur du pot.

5. Récipient selon les revendications 3 ou 4, caractérisé en ce que ladite ouverture supérieure (5) de la paroi latérale est pourvue d'au moins une ficelle ou ruban (6), du type laisse.

6. Récipient selon la revendication 3, caractérisé en ce qu'il se compose dudit élément en forme de pot (11) et d'un sachet souple jetable (17), ce sachet ayant des dimensions suffisantes pour pouvoir tapisser l'intérieur dudit élément en étant retroussé par-dessus le pourtour de l'ouverture (15) dans la position de réception.

7. Récipient selon la revendication 6, caractérisé en ce que ladite ouverture (15) est définie par un anneau pliable (14) raccordé au bord supérieur de la partie inférieure (13a) de l'élément en forme de pot, cet anneau étant composé de deux bandes semi-circulaires (14a,14b) rigides dont les extrémités respectives sont articulées et qui comportent des moyens d'accrochage pour être assemblées l'une contre l'autre de manière démontable, de façon à fermer l'élément en forme de pot.

8. Récipient selon la revendication 7, caractérisé en ce que le fond (12) et ladite partie inférieure (13a) de la paroi latérale sont rigides et en ce que ladite partie supérieure (13b) de la paroi latérale est plissée en accordéon.
